# EUROPÄISCHE PATENTANMELDUNG

(11) **EP 0 620 384 A1**
(43) Veröffentlichungstag der Anmeldung: **19.10.1994**
(21) Anmeldenummer: 93105912.5
(22) Anmeldetag: 12.04.1993
(51) Int. Cl.: F16H 37/02, F16H 15/28, B01F 15/00

(54) **Getriebe mit veränderbarer Übersetzung, insbesondere für Laborgeräte**

(71) Anmelder: Heidolph-Elektro GmbH & Co. KG, D-93309 Kelheim (DE)
(72) Erfinder: Vollgold, Günter, 8540 Rednitzhembach (DE)
(74) Vertreter: Göbel, Matthias, Dipl.-Ing.

(57) **Zusammenfassung**

Bei einem Getriebe mit veränderbarer Übersetzung,insbesondere für Laborgeräte, z.B. Rührwerke od. dgl. mit einem durch einen Motor drehbaren Reibkugelgetriebe, dessen Abtriebsrad drehfest mit dem Antriebsglied eines nachgeschalteten verzahnten Schieberadgetriebes verbunden ist und mit auf der Getriebeabtriebswelle angeordneten Schieberädern, ist zu einfachen Betätigungen der Schieberäder ohne Stellungsänderungen der Getriebeabtriebswelle vorgesehen, daß die Getriebeabtriebswelle (16) unverschiebbar im Getriebegehäuse (1) ausgebildet und durch eine verschiebliche Trägerhülse (15) für die Schieberäder (13, 14) umfaßt ist und daß die Trägerhülse (15) durch ein in einer Seitenwand außen des Getriebegehäuses (1) angeordnetes Stellglied (19) zu Eingriffen des einen oder anderen Schieberades (13, 14) in die Zahnungen (11, 12) eines mit dem Abtriebsrad (6) des Reibkugelgetriebes (5) verbundenen Getrieberades (10) auf der Getriebeabtriebswelle (16) verschiebbar ist.

## Beschreibung

Die Erfindung betrifft ein Getriebe mit veränderbarer Übersetzung, insbesondere für Laborgeräte, z.B. Rührwerke od.dgl. mit einem durch einen Motor drehbaren Reibkugelgetriebe, dessen Abtriebsrad drehfest mit dem Antriebsglied eines nachgeschalteten verzahnten Schieberadgetriebes verbunden ist und mit auf der Getriebeabtriebswelle angeordneten Schieberrädern.

Zum Antreiben von Laborgeräten, z.B. Rührwerke sind Kugelreibgetriebe mit nachgeschalteten verzahnten Schieberradgetrieben bereits bekannt. Bei diesen Antrieben ermöglichen die auf der Getriebeabtriebswelle angeordneten Schieberäder durch Verschieben der Getriebeabtriebswelle die Bildung von Übersetzungsstufen. Die Schiebebewegungen der Abtriebswelle führen jedoch zu verschieden weiten Stellungen der Spannfutter zum Rührbehälter, die vielfach zeit- und arbeitsaufwendige Nachstellbewegungen des Rührwerks erfordern.

Es ist Aufgabe der Erfindung, die Betätigung der Schieberäder bei Getrieben obiger Gattung zu vereinfachen und Stellungsänderungen der Getriebeabtriebswelle bei Schaltvorgängen zu vermeiden.

Erfindungsgemäß ist diese Aufgabe dadurch gelöst, daß die Getriebeabtriebswelle unverschiebbar im Getriebegehäuse ausgebildet und durch eine verschiebliche Trägerhülse für die Schieberäder umfaßt ist und daß die Trägerhülse durch ein in einer Seitenwand außen des Getriebegehäuses angeordnetes Stellglied zu Eingriffen des einen oder anderen Schieberades in die Zahnungen eines mit dem Abtriebsrad des Reibkugelgetriebes verbundenen Getrieberades auf der Getriebeabtriebswelle verschiebbar ist. Nach bevorzugter Ausführung ist das Stellglied für das Schieberadgetriebe in der Frontseite des Getriebegehäuses ausgebildet. Auf diese Weise ist ein Getriebe geschaffen, das bei Übersetzungsänderungen mit unveränderlich konstantem Abstand zum Rührgefäß und dem Rührgut verbleibt und bei dem vermittels des Stellgliedes einfach und sicher Übersetzungssstufen leicht zuganglich schaltbar sind.

In Ausgestaltung des Getriebes ist vorgesehen, als Stellglied für das Schieberadgetriebe einen vermittels eines Drehknopfs drehbaren Bolzen in Anwendung zu bringen, der auf der Stirnseite des freien Endes einen in eine Ringnut der Trägerhülse frei eintauchenden Ansatz exzentrisch fest aufweist. Durch einfache Drehbewegungen des Stellglieds sind so axiale Verschiebungen der Trägerhülse und der Schieberäder auf der Getriebeabtriebswelle zu wechselweisen Eingriffen der Schieberäder mit einem mit der Abtriebswelle des Reibkugelgetriebes in Verbindung stehenden Getrieberades erreichbar. Es besteht auch die Möglichkeit, mittels des Ansatzes eine verschiebbare Gabel zu verschieben, die ihrerseits in die Ringnut der Trägerhülse frei eintaucht und diese längsbewegt. Die Gabel bringt den Vorteil einer verkantungsfreien Wirkverbindung von Stellglied und Trägerhülse

Weiter ist denkbar, als Stellglied einen im Getriebegehäuse gelagerten Schieber in Anwendung zu bringen, der unmittelbar oder mittelbar über einen Ansatz in eine Ringnut der Trägerhülse frei eintaucht und die Trägerhülse zu verschieben erlaubt.

Es versteht sich, daß bei Verschiebebewegungen der Schieberäder und ihren Eingriffen in das mit dem Abtriebsrad des Reibkugelgetriebes verbundenen Getrieberad, insbesondere bei schnellen Umläufen störende Verzahnungsgeräusche auftreten. Zur Vermeidung dieses Mangels ist vorgesehen, daß das Stellglied einen Nocken, eine Kulisse od. dgl. aufweist und daß der Nocken, Kulisse od. dgl. das Betätigungsorgan für einen dem Stellglied zugeordneten, im Stromkreis des Motors liegenden Ausschalters bildet. Der Nocken bzw. die Kulisse kann so ausgebildet und angeordnet sein, daß insbesondere bei Schaltungen zu schnellen Umläufen der Abtriebswelle der Motor stillsetzbar ist. Abgesehen davon, daß so ein beschädigungsfreies Schalten von Übersetzungsstufen erzielbar ist und störende Schaltgeräusche vermieden sind, ergibt sich als zweiter Effekt durch die Motorabschaltung die Vermeidung von Verspritzungen des Rührguts infolge plötzlichen hochtourigen Umläufen der Getriebeabtriebswelle. Darüberhinaus ist auch vorgesehen, den Motor nach den Abschaltungen durch das Stellglied jeweils durch einen Hauptschalter erneut an die Stromquelle anzulegen.

Letztlich ist vorgesehen, in der Frontseite des Getriebegehäuses zu weiterer Bedienungsvereinfachung zusätzlich zum Stellgliled für die Schieberäder ein Stellglied für den als Hauptschalter wirkenden Ein- Ausschalter für den Motor und ein Stellglied zu Abschwenkungen der Reibkugel des Reibkugelgetriebes anzuordnen. Es versteht sich, daß die Stellglieder gemeinsam oder getrennt einzeln auch anderweitig, z.B. in einer Seitenwand des Gehäuses angeordnet sein können.

Die Erfindung ist anhand eines Ausführungsbeispiels in der Zeichnung verdeutlicht. Hierin bedeuten:
- Fig. 1: ein Getriebe in Seitenansicht, teilweise im Schnitt,
- Fig. 2: ein Teilstück eines Getriebes in Vorderansicht,
- Fig. 3: ein Stellglied in Vorderansicht, teilweise im Schnitt, vergrößert und
- Fig. 4: einen Teilschnitt eines Getriebes in abgewandelter Ausführung.

In den Fig. ist mit 1 ein Getriebegehäuse bezeichnet, das einen Motor 2 trägt. Der Motor 2 treibt über ein Ritzel 3 eine an eine Halterung 8 drehbewegbar gelagerte und um eine Achse 4 schwenkbbewegliche Reibkugel 5 eines Reibkugelkugelgetriebes an, die mit einem Getrieberad 6 reibschlüssig in Verbindung steht. Durch Abschwenken der Reibkugel 5 um die Achse 4 sind kontinuierlich veränderbare Übersetzungen erzielbar. Die Abschwenkungen der Reibkugel 5 können dabei durch Angreifen eines Stellgliedes (nicht gezeigt) an einem Bolzen (7) der Reibkugelhalterung 8 bewirkt werden. Das Getrieberad 6 ist auf einem im Gehäuse 1 bei 9 gelagerten verzahnten Getrieberad 10 fest aufgesetzt. Das Getrieberad 10 weist eine Zahnung 11 mit kleinem und eine Zahnung 12 mit großem Durchmesser auf. Mit den Zahnungen 11 und 12 sind die beiden Schieberäder 13 und 14 zu Übersetzungsstufen wechselweise zum Eingriff bringbar, die auf einer Trägerhülse 15 fest aufgebracht sind. Die Trägerhülse 15 umfaßt eine Abtriebswelle 16 drehfest verschieblich. Die Abtriebswelle 16 ist vermittels Lager 17 im Gehäuse 1 geführt. Die Trägerhülse 15 weist beim Ausführungsbeispiel eine Ringnut 18 auf, in die ein in der Frontseite 22 des Gehäuses 1 verdrehbar gelagertes Stellglied 19 mit einem an einem Bolzen 20 exzentrisch angebrachten Zapfen 21 frei eintaucht. Zusätzlich weist die Frontseite 22 Stellglieder 23 (Fig. 2) für einen im Stromkreis des Motors 2 liegenden Hauptschalter (nicht gezeigt) sowie ein Stellglied 24 zur Erzielung von Schwenkbewegungen der Reibkugel 5 auf.

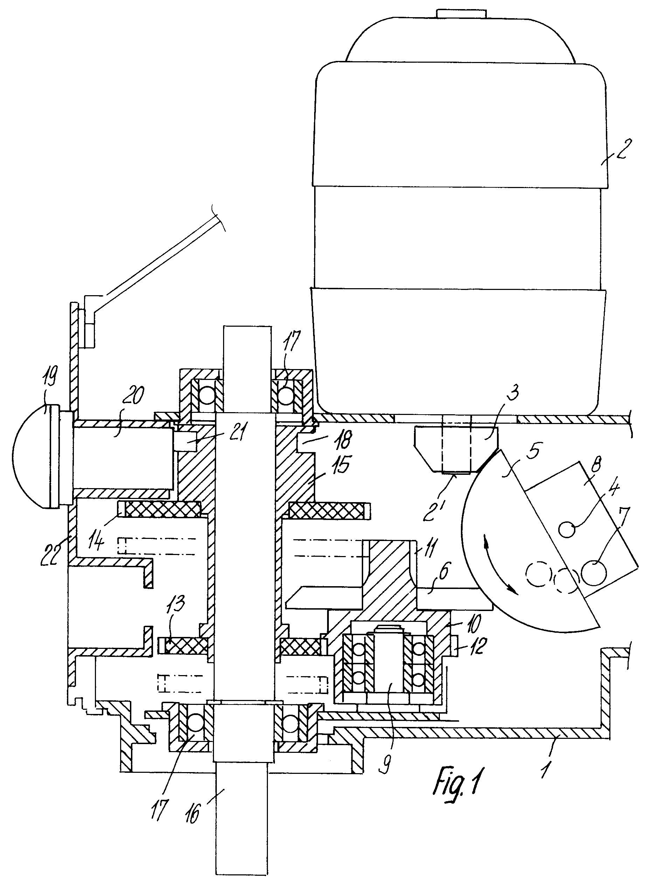

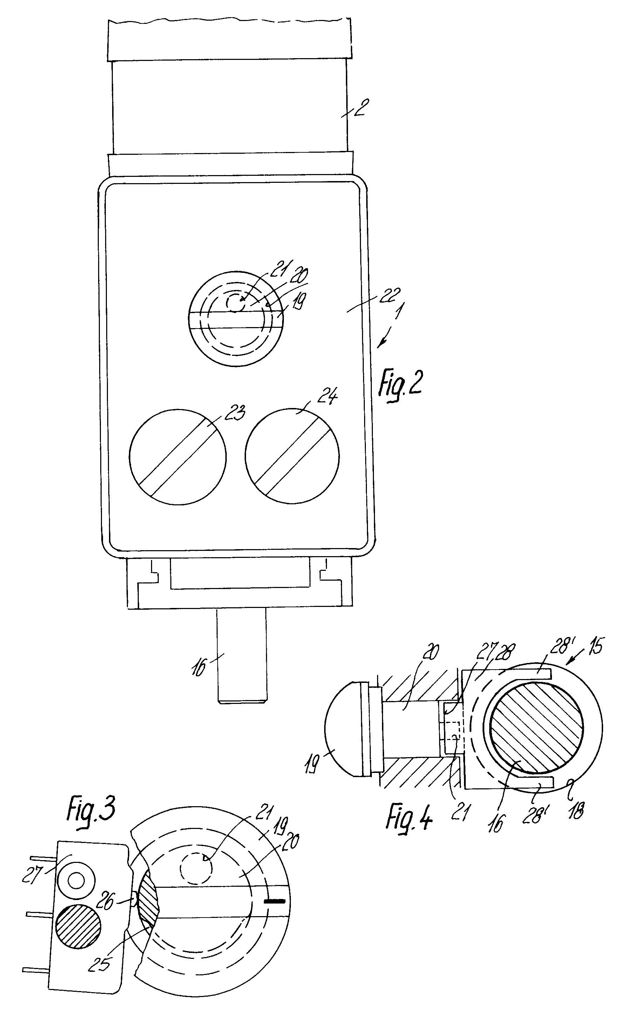

Bei Umläufen der Motorwelle 2' wird über das Ritzel 3 und der Reibkugel 5 das Getrieberad 6 gedreht und durch dieses das Getrieberad 10 mitgenommen. In der oberen Stellung der Trägerhülse 15 (Fig. 1) kommt das im Durchmesser kleinere Schieberad 13 mit der Zahnung 12 des Getrieberades 10 in Eingriff, wodurch schnelle Umläufe der Abtriebswelle 16 erreichbar sind. Durch Schwenken des Stellgliedes 19 kann über den Zapfen 21 die Trägerhülse 15 verschoben und das kleine Schieberad 13 außer Eingriff gebracht werden, während das große Schieberad 14 mit der Zahnung 11 des Getrieberades 10 in Eingriff kommt. Hierbei nehmen die Schieberäder 13, 14 die gestrichelt dargestellten Stellungen ein.

Um bei Übersetzungsänderungen Beschädigungen der Zahnungen der Schieberräder 13, 14 bzw. 11, 12 des Getrieberades 10 sowie störende Schaltgeräusche an den Zahnungen zu vermeiden, kann gemäß Fig. 3, der Bolzen 20 des Stellgliedes 19 einen Nocken oder Kulisse 25 aufweisen, die mit einem Betätigungsorgan 26 eines Schalters 27 zur Wirkung bringbar ist, der im Stromkreis des Motors 2 liegt. Hierdurch sind, insbesondere zum Schalten schneller Bewegungen der Abtriebswelle 16 zunächst ein Stillsetzen des Motors 2 erzielbar. Zu Wiederanläufen des Motors 2 ist das Stellglied 23 auf Aus und nachfolgend in die Einschaltstellung zu bringen.

In Fig. 4 greift abweichend der Zapfen 21 des Stellgiedes 19 in die Nut 27 einer Gabel 28 ein, die mit ihren Enden 28' in die Ringnut 18 der Trägerhülse 15 eintaucht. Die Gabel 28 führt zu gleichmäßigen Verschiebebewegungen der Abtriebswelle 16.

## Patentansprüche

1. Getriebe mit veränderbarer Übersetzung, insbesondere für Laborgeräte, z.B. Rührwerke od. dgl. mit einem durch einen Motor drehbaren Reibkugelgetriebe, dessen Abtriebsrad drehfest mit dem Antriebsglied eines nachgeschalteten verzahnten Schieberadgetriebes verbunden ist und mit auf der Getriebeabtriebswelle angeordneten Schieberädern, dadurch gekennzeichnet, daß die Getriebeabtriebswelle (16) unverschiebbar im Getriebegehäuse (1) ausgebildet und durch eine verschiebliche Trägerhülse (15) für die Schieberräder (13, 14) umfaßt ist und daß die Trägerhülse (15) durch ein in einer Seitenwand außen des Getriebegehäuses (1) angeordnetes Stellglied (19) zu Eingriffen des einen oder anderen Schieberades (13, 14) in die Zahnungen (11, 12) eines mit dem Abtriebsrad (6) des Reibkugelgetriebes (5) verbundenen Getrieberades (10) auf der Getriebeabtriebswelle (16) verschiebbar ist.

2. Getriebe nach Anspruch 1, dadurch gekennzeichnet, daß das Stellglied (19) für das Schieberadgetriebe in der Frontseite (22) des Getriebegehäuses (1) ausgebildet ist.

3. Getriebe nach Anspruch 1 und 2, dadurch gekennzeichnet, daß als Stellglied (19) für das Schieberadgetriebe ein vermittels eines Drehknopfs drehbarer Bolzens (20) dient, der auf der Stirnseite des freien Endes einen in eine Ringnut (18) der Trägerhülse (15) frei eintauchenden Ansatz oder Zapfen (21) exzentrisch fest aufweist.

4. Getriebe nach Anspruch 1 und 2, dadurch gekennzeichnet, daß das Stellglied (19) durch einen vermittels eines Drehknopfs drehbaren Bolzen (20) mit einem auf der Stirnseite des freien Endes exzentrisch angeordneten Ansatz oder Zapfen (21) und einer durch den Ansatz oder Zapfen (21) verschiebbaren Gabel (28) od.dgl. gebildet ist, die in eine Ringnut (18) der Trägerhülse (15) frei eintaucht. (Fig. 4)

5. Getriebe nach Anspruch 1 und 2, dadurch gekennzeichnet, daß als Stellglied ein im Getriebegehäuse (1) gelagerter Schieber dient, der mit einem Ansatz od.dgl. in eine Ringnut (18) der Trägerhülse (15) frei eintaucht.

6. Getriebe nach einem der Ansprüche 1 bis 5, dadurch gekennzeichnet, daß das Stellglied (19) einen Nocken, eine Kulisse od.dgl. (25) aufweist und daß der Nocken, die Kulisse od.dgl. (25) das Betätigungsorgan (26) eines dem Stellglied (19) zugeordneten, im Stromkreis des Motors (2) liegenden Ausschalters (27) bildet.

7. Getriebe nach Anspruch 1 und 2, dadurch gekennzeichnet, daß in der Frontseite (22) des Getriebegehäuses (1) zusätzlich zum Stellglied (19) für das Schieberadgetriebe ein Stellglied (23) für einen Ein- Ausschalter für den Motor (2) und ein Stellglied (24) zu Abschwenkungen der Reibkugel (5) des Reibkugelgetriebes angeordnet sind.
